# EUROPEAN PATENT SPECIFICATION

(11) **EP 4 135 870 B1**
(45) Date of publication and mention of the grant of the patent: **16.04.2025**
(21) Application number: 20930712.3
(22) Date of filing: 17.04.2020
(51) Int. Cl.: B01D 25/164, B01D 25/21, B01D 25/28, B01D 25/168

(54) **A FILTER PLATE FRAME ASSEMBLY AND A HORISONTAL FILTER PRESS, SUCH AS A TOWER PRESS, HAVING SUCH A PLATE FRAME ASSEMBLY**
FILTERPLATTENRAHMENANORDNUNG UND HORIZONTALE FILTERPRESSE, WIE EINE TURMPRESSE, MIT EINER SOLCHEN PLATTENRAHMENANORDNUNG
ENSEMBLE CADRE DE PLAQUE FILTRANTE ET FILTRE-PRESSE HORIZONTAL, TELLE QU'UNE PRESSE À TOUR, COMPRENANT UN TEL ENSEMBLE CADRE DE PLAQUE

(43) Date of publication of application: 22.02.2023
(73) Proprietor: Metso Finland Oy, 02230 Espoo (FI)
(72) Inventor: MUSTAKANGAS, Mirva, 33950 Pirkkala (FI); JUVONEN, Ismo, 55300 Rauha (FI); KAIPAINEN, Janne, 69510 Halsua (FI); ELORANTA, Teemu, 54530 Luumäki (FI); ILLI, Mika, 01700 Vantaa (FI); VÄNTTINEN, Kari, 02330 Espoo (FI)
(74) Representative: Boco IP Oy Ab
(86) International application number: PCT/FI2020/050251
(87) International publication number: WO 2021/209676

(56) References cited:
- DE-C1- 19 905 674
- GB-A- 2 069 360
- US-A- 3 931 014
- US-A- 4 617 863
- US-A- 4 749 482
- US-A- 4 749 482
- US-A1- 2010 163 476

## Description

### FIELD OF THE DISCLOSURE

The present disclosure relates to horizontal filter presses, such as tower presses, and more particularly to a filter plate frame assembly for such a filter press.

### BACKGROUND OF THE DISCLOSURE

In horizontal filter presses, a horizontally extending filter chamber is formed between adjacent, superimposed filter plate frame assemblies. During the filtration cycle, the filter plate assemblies are pressed against each other to seal the filter chamber, and a slurry is introduced into the filter chamber, where filtrate is separated from the slurry by a filter medium. The filtrate is conducted to further processing, while the solids content of the slurry form a filter cake in the filter chamber. The filter cake is removed from the filter chamber by lifting the filter plate frame assemblies such that they move away from each other (i.e., opening the filter chamber). The filter medium, typically forming an endless loop in a zig-zag -pattern, is advanced and the filter cake is discharged by dropping it from on top of the filter medium that turns around a roller.

In order to remove as much as possible of the liquid content of the filter cake, a diaphragm is often provided for squeezing the filter cake in the filter chamber, so as to extract residual filtrate from the filter cake. Such a diaphragm is typically attached to a filter frame such that it resides vertically between the frame and a filter plate supported by the frame. A space between the diaphragm and the filter plate is sealed with a seal bead on the diaphragm, such that a pressurized medium can be introduced into the space. The pressurized medium inflates the diaphragm towards the filter chamber thereby squeezing the filter cake. The pressure used to inflate the diaphragm typically lies between the range of 8-20 bar over the ambient pressure. The diaphragm can withstand this pressure because the pressure prevailing in the filter chamber (and the filter cake) prevents excessive deformation of the diaphragm, which would lead to damage.

It has been found out that in exceptionally rare cases of malfunction or improper use of the filter press, pressurized medium may be led into the space between the filter plate and the diaphragm when the filter chamber is opened. As no counteracting pressure is in the filter chamber, this allows the diaphragm to be excessively inflated, causing damage to, or even catastrophic failure of the diaphragm. This poses a serious risk of injury as it could lead to the diaphragm exploding. Examples of prior art documents are US4749482, US4617863 GB2069360 and US3931014.

### BRIEF DESCRIPTION OF THE DISCLOSURE

An object of the present disclosure is to provide a filter plate frame assembly and a horizontal filter press, in which accidental overpressurization of the filter diaphragm is prevented.

The object of the disclosure is achieved by a filter plate frame assembly and a horizontal filter press which are characterized by what is stated in the independent claims. The preferred embodiments of the disclosure are disclosed in the dependent claims.

The disclosure is based on the idea of providing a filter plate frame assembly having a separate subframe with a limited vertical travel with respect to the filter frame and filter plate such that the subframe is allowed to drop away from the filter plate when the filter chamber is opened.

This enables a diaphragm to be attached to the subframe such that an escape route is formed for a pressurized medium accidentally introduced between the filter plate and the diaphragm. Moreover, the limited travel of the subframe allows the subframe to be pressed towards the filter plate when the filter chamber is closed, thereby allowing normal operation of the diaphragm for squeezing a filter cake formed in the filter chamber.

An advantage of the disclosure is that operational safety is significantly increased, as accidental introduction of a pressurized medium into a space between a diaphragm and a filter plate does not cause the diaphragm to excessively inflate

### BRIEF DESCRIPTION OF THE DRAWINGS

In the following the disclosure will be described in greater detail by means of preferred embodiments with reference to the accompanying drawings, in which
Fig. 1 schematically illustrates a filter plate frame assembly according to an embodiment of the present disclosure where the subframe is in a lowermost position, as seen as a partial cut-view;
Fig. 1a illustrates a detailed view of the subframe, diaphragm and filter plate of Fig. 1
Fig. 2 illustrates the filter plate frame assembly of Fig. 1, where the subframe is in the uppermost position, and
Fig. 2a illustrates a detailed view of the subframe, diaphragm and filter plate of Fig. 2

### DETAILED DESCRIPTION OF THE DISCLOSURE

According to a first aspect of the present disclosure, a filter plate frame assembly 1 for a horizontal filter press, such as a tower press, is provided.

The filter plate frame assembly 1 comprises a rigid filter plate frame 2 defining a closed periphery. The purpose of the frame 2 is to support against laterally (i.e. horizontally) directed forces caused by the pressure prevailing in the filter chamber during operation, and also, provide a structure which can be lifted and lowered for opening and closing a filter chamber formed by adjacent filter plate frame assemblies 1.

The filter plate frame assembly 1 further comprises a filter plate 3 attached onto the filter plate frame 2 on a plate side 1a of the filter plate frame assembly 1, and covering at least an area delimited by the filter plate frame. The purpose of the filter plate is to provide support against vertically directed forces caused by the pressure prevailing in the filter chamber during operation, and also, to provide a structure onto which a filtrate vat for collecting filtrate can be formed.

The filter plate frame assembly 1 further comprises a diaphragm 5 having a continuous seal bead 6 for sealing the diaphragm 5 against the filter plate 3, such that a space delimited by the seal bead 6 is defined between the diaphragm 5 and the plate 3. As discussed earlier, the purpose of the diaphragm is to squeeze residual liquid contents out from the filter cake formed in the filter chamber. Suitably, the seal bead 6 extends around the periphery of diaphragm 5.

Particularly, the filter plate frame assembly 1 further comprises a subframe 4 with a central opening 4b having a closed area defining a lateral boundary of an associated filter chamber 4c, when in use. The subframe 4 is nested within and laterally delimited by the closed periphery of the filter plate frame 2. This means that the more rigid frame 2 supports the subframe 4 against lateral forces exerted thereon by a pressure prevailing in the filter chamber. Consequently, the subframe can be constructed with a much more light-weight and less rigid structure, as compared to the frame 2.

The subframe 4 is vertically secured between the filter plate frame 2 and the filter plate 3, such that a vertical free play of the subframe 4 between the plate 3 and the frame 2 allows a limited vertical travel of the subframe 4 with respect to the frame 2 and the plate 3. It should be noted that, in the context of this disclosure, the free play and the limited vertical travel are distinguished from, and exceed, any possible manufacturing clearances.

The diaphragm 5 is attached to the subframe 4 such that it resides between the subframe 4 and the filter plate 3 and covers an area delimited by the sub-frame 4. Most suitably, the diaphragm 5 resides vertically between the subframe 4 and the filter plate, at least at where the diaphragm 5 is to be sealed against the plate 3.

As the diaphragm is attached to the subframe 4, it shares the same limited vertical travel with respect to the filter plate 3 as the subframe.

In an embodiment according to the first aspect, the subframe 4 has an uppermost position within the limited vertical travel. The uppermost position corresponds to a situation in which the subframe 4 is pressed towards the plate 3, i.e., when adjacent filter plate frame assemblies 1 are pressed against each other so as to close a filter chamber formed therebetween. Correspondingly, the subframe 4 also has a lowermost position within the limited vertical travel. The lowermost position corresponds to a situation in which the subframe 4 is not pressed towards the plate 3, i.e., when adjacent filter plate frame assemblies 1 are away from each other so as to open a filter chamber formed therebetween

Preferably, but not necessarily, the frame 2 comprises a first bearing surface 2a and the subframe 4 comprises a second bearing surface 4a. In the lowermost position, the subframe 4 is vertically supported by the first bearing surface 2a at the second bearing surface 4a. Moreover, in the uppermost position, the subframe 4 is not vertically supported by the by the first bearing surface 2a.

More preferably, but not necessarily, the first bearing surface 2a comprises a groove 2a' and a ridge 2a" and the second bearing surface 4a comprises a groove 4a' and ridge 4a". Particularly, the groove of the first bearing surface 2a' is configured to form fittingly receive the ridge 4a" of the second bearing surface 4a. Correspondingly, the groove 4a' of the second bearing surface 4a is configured to from-fittingly receive the ridge 2a" of the first bearing surface 2a.

Such a geometry of the bearing surfaces 2a, 4a helps retain the subframe laterally (i. e., horizontally) in place with respect to the frame 2 while allowing the limited vertical travel of the subframe 4. At the same time such a geometry allows transferring lateral forces between the subframe 4 and the frame 2, thus helping the subframe 4 to maintain its proper shape.

Although the embodiments illustrated in the appended drawings show the grooves 2a', 4a', and ridges 2a", 4a" of the first and second bearing surfaces 2a, 4a provided in staggered configuration, they could alternatively also be provided as continuous curved contours, as inclined linear surfaces, or a combination of the above.

Preferably but not necessarily, the filter plate frame assembly can be configured such that, when the sub-frame 4 is the uppermost position, the seal 6 is engaged with the plate 3, and correspondingly, when the subframe 4 is in the lowermost position, the seal 6 is disengaged from the plate 3. This ensures, that pressure can not build up in the space between the diaphragm 5 and the filter plate 3, when the filter chamber is open.

Alternatively, the filter plate frame assembly can be configured such that, when the subframe 4 is in the lowermost position, the seal bead 6 is engaged with the plate 3 so as to provide sealing against a first pressure differential, and to leak under a second pressure differential, which is higher than the first pressure differential. Moreover, the filter plate frame assembly can be configured such that, when the subframe 4 is in the uppermost position, the seal bead 6 engages with the plate 3 so as to provide sealing also against a third pressure differential, which is higher than the second pressure differential.

This allows using the first pressure differential (i.e. an underpressure in the space between the diaphragm 5 and the filter plate 5), to hold the diaphragm 5 up when the filter chamber is opened to facilitate discharge of the cake from the filter chamber, while preventing excessive inflation of the diaphragm 5 caused by an accidental pressurization exceeding the second pressure differential (i.e. an overpressure in the space between the diaphragm 5 and the filter plate 3) from damaging the diaphragm and causing a risk of injury to operating personnel. Moreover, a sufficient third pressure differential (i.e., an overpressure in the space between the diaphragm 5 and the filter plate 3) is achieved for squeezing the filter cake, when filter chamber is closed.

Such a first pressure differential is conventionally much smaller than such a third pressure differential. Typically, the first pressure differential (i.e., the underpressure between the ambient pressure and the space between the diaphragm 5 and the filter plate 3) lies between 0.01 - 0.10 bar, while the third pressure differential (i.e., the overpressure between ambient pressure and the space between the diaphragm 5 and the filter plate 3) is between 8 - 20 bar. Furthermore, the second pressure differential (i.e., the overpressure between ambient pressure and the space between the diaphragm 5 and the filter plate 3) is generally only slightly higher than the first pressure differential, typically approx. 0,15 bar.

For example, this could be achieved by providing the seal bead 6 with two seal lips, one of which is elevated higher from the diaphragm 10 than the other. In such a case, only the higher elevated seal lip may be configured to engage with the filter plate 3 when the subframe 4 is in the lowermost position, so as to provide sealing against the first pressure differential and leak under the second pressure differential. Moreover, both the higher elevated and lower elevated seal lip may be configured to engage the filter plate 3 when the subframe 4 is in the uppermost position, so as to seal against the third pressure differential.

Most suitably a seal lip elevated higher is provided on a lateral outside of the diaphragm with respect to the seal lip elevated lower. Alternatively, or additionally, the seal lip elevated higher may have a directional self-sealing geometry against an overpressure prevailing on the lateral outside, while the seal lip elevated lower may have a directional self-sealing geometry against an overpressure prevailing on the lateral inside.

In an embodiment according to the present disclosure, the limited travel of the of subframe 4 is at least.0,5 mm. Preferably, the limited travel of the subframe is at least 1 mm.

Suitably, the limited travel of the subframe is less than 10mm. This is because it is undesirable to increase the vertical motion of adjacent plate frame assemblies required to open the filter chamber. The total vertical movement of the associated filter press required for opening all filter chambers is the required vertical travel between two adjacent plate frame assemblies multiplied by the number of filter chambers. Moreover, increasing the required vertical travel increases the cycle time of the filtration cycle.

It should be noted that the first aspect of the present disclosure encompasses any combination of two or more embodiments, or variants thereof, as discussed above.

According to a second aspect of the present disclosure, a horizontal filter press, such as a tower press, is provided.

Particularly, the filter comprises a plurality of filter plate frame assemblies according to the first aspect of the present disclosure, as discussed above.

The filter plate frame assemblies 1 are configured movable towards each other into a closed position in which a filter chamber 4c is formed between adjacent filter plate frame assemblies 1, and away from each to an open position in which adjacent filter plate frame assemblies 1 are spaced apart from each other.

The filter further comprises a filter medium arranged between adjacent filter plate frame assemblies 1.

The filter further comprises a translation arrangement for moving the filter plate frame assemblies 1 towards each other so as to form a filter chamber 4c between adjacent filter plate frame assemblies 1, and away from each other so as to open the filter chamber.

The filter further comprises a feed arrangement for feeding slurry into the filter chamber 4c, a recovering arrangement for recovering filtrate from the filter chamber 4c, and a discharge arrangement for discharging a filter cake formed within the filter chamber 4c.

In an embodiment according to the second aspect of the present disclosure, the filter press further comprises diaphragm inflation means for providing a pressurized medium into the space between the diaphragm 5 and the filter plate 3 so as to inflate the diaphragm and squeeze a filter cake formed within the filter chamber 4c.

It should be noted that the second aspect of the present disclosure encompasses any combination of two or more embodiments, or variants thereof, as discussed above.

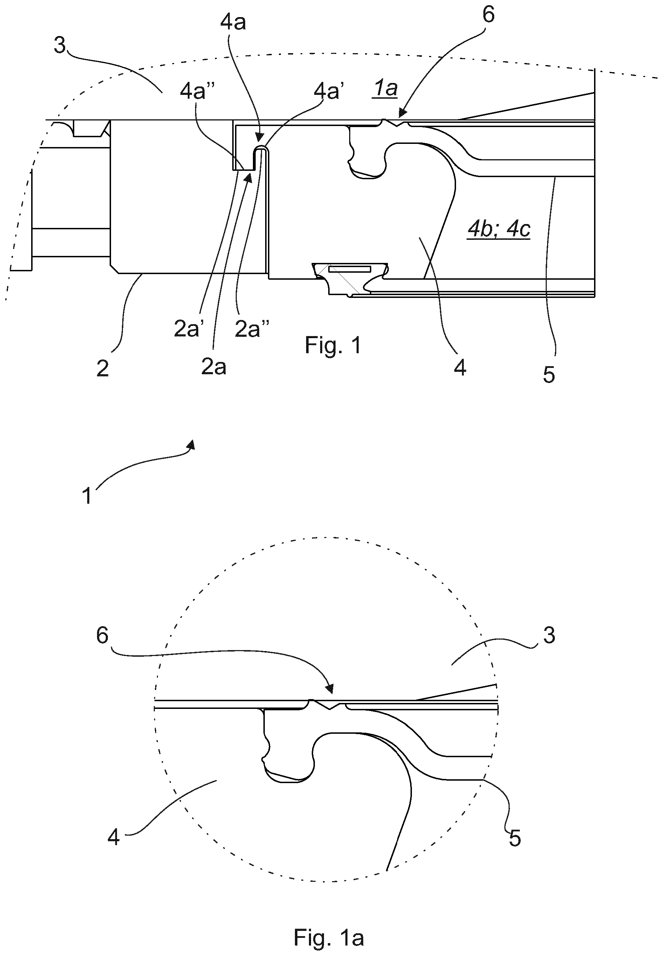

Fig. 1 schematically illustrates a filter plate frame assembly 1 according to an embodiment of the present disclosure, as seen as a partial cut view. Particularly, the subframe 4 is the lowermost position, corresponding to a situation in which the filter chamber 4c is opened. The seal bead 6 has two seal lips, the laterally outer seal lip being elevated higher from the remaining diaphragm 5 than the laterally inner seal lip. The laterally outer seal lip engages with the filter plate 3 such that a sufficient underpressure (with respect to the ambient pressure) may be exerted into the space between the diaphragm and the filter plate 3, so as to lift the diaphragm up to facilitate filter cake discharge. At the same time, the sealing provided by only the laterally outer seal lip is sufficiently weak to allow an accidental overpressure only slightly higher than the underpressure (with respect to the ambient pressure) to leak through the laterally outer seal lip. For example, the underpressure may be 0,05 - 0,10 bar, whereas the over pressure may be 0,15 bar or higher.

Fig. 1a illustrates a detailed view of the subframe 4, diaphragm 5 and filter plate 3 of Fig. 1

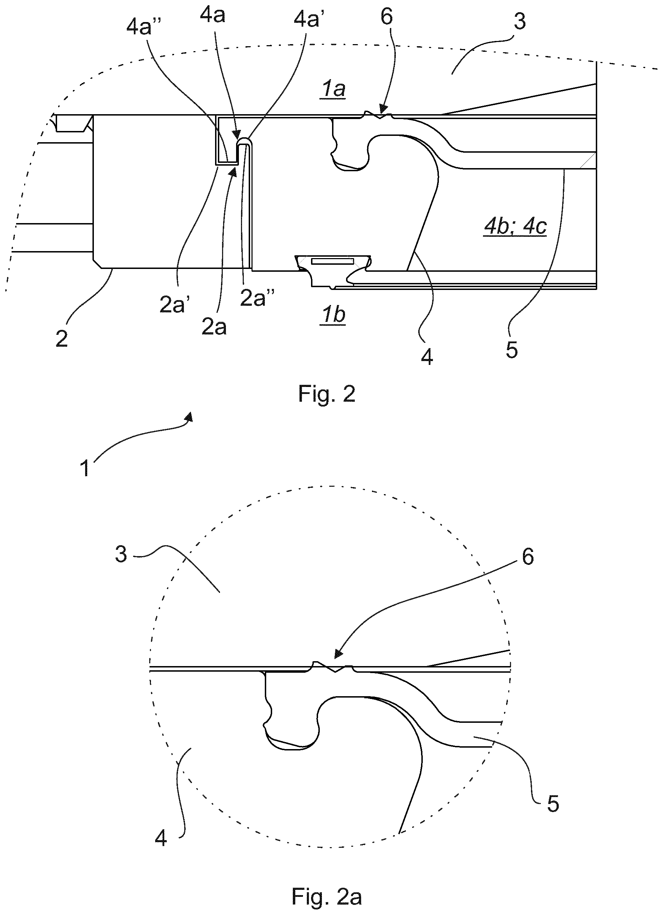

Fig. 2 illustrates the filter plate frame assembly 1 of Fig. 1, where the subframe 4 is in the uppermost position, corresponding to a situation in which the filter chamber 4c is closed. In the uppermost position of the subframe 4, both the laterally outer and laterally inner seal lip are engaged with the filter plate 3. This allows a sufficiently high over pressure (with respect ot the ambient pressure) of typically between 8-20 bar to be formed in the space between the diaphragm 5 and the filter plate 3, so as to inflate the diaphragm into the filter chamber 4c during filtration, and squeeze residual liquid contents out of the filter cake. , and

Fig. 2a illustrates a detailed view of the subframe, diaphragm and filter plate of Fig. 2

### LIST OF REFERENCE NUMERALS

- 1: filter plate frame assembly
- 1a: plate side
- 2: filter plate frame
- 2a: first bearing surface of plate frame
- 2a': groove of first bearing surface
- 2a": ridge of first bearing surface
- 3: filter plate
- 4: subframe
- 4a: second bearing surface of subframe
- 4a': groove of second bearing surface
- 4a": ridge of second bearing surface
- 4b: central opening of subframe
- 4c: filter chamber formed in central opening
- 5: diaphragm
- 6: seal bead

## Claims

1. A filter plate frame assembly (1) for a horizontal filter press, such as a tower press, comprising:
a rigid filter plate frame (2) defining a closed periphery, and
a filter plate (3) attached onto the filter plate frame (2) on the plate side (1a) of the filter plate frame assembly (1), and covering at least an area delimited by the filter plate frame (2), and
a diaphragm (5) having a continuous seal bead (6) for sealing the diaphragm (5) against the filter plate (3), such that a space delimited by the seal bead (6) is defined between the diaphragm (5) and the plate (3),
**characterized in that** the filter plate frame assembly (1) further comprises a sub-frame (4) with a central opening (4b) having a closed area defining a lateral boundary of an associated filter chamber (4c), when in use, and
wherein the subframe (4) is nested within and laterally delimited by the closed periphery of the filter plate frame (2),
wherein the subframe (4) is vertically secured between the filter plate frame (2) and
the filter plate (3), such that a vertical free play of the subframe (4) between the plate (3) and the frame (2) allows a limited vertical travel of the subframe (4) with respect to the frame (2) and the plate (3), and
wherein the diaphragm is attached to the subframe (4), resides between the subframe (4) and the filter plate (3) and covers an area delimited by the sub-frame (4).

2. The filter plate frame assembly (1) according to Claim 1, **characterized in that** the subframe (4) has an uppermost position within the limited vertical travel corresponding to a situation in which the subframe (4) is pressed towards the plate (3), and a lowermost position within the limited vertical travel corresponding to a situation in which the subframe (4) is not pressed towards the plate (3).

3. The filter plate frame assembly (1) according to Claim 2, **characterized in that** the frame (2) comprises a first bearing surface (2a) and the subframe (4) comprises a second bearing surface (4a),
wherein, in the lowermost position, the subframe (4) is vertically supported by the first bearing surface (2a) at the second bearing surface (4a), and
wherein, in the uppermost position, the subframe (4) is not vertically supported by the by the first bearing surface.

4. The filter plate frame assembly (1) according to Claim 3, **characterized in that** the first bearing surface (2a) comprises a groove (2a') and a ridge (2a") and the second bearing surface (4a) comprises a groove (4a') and ridge (4a"),
wherein the groove of the first bearing surface (2a') is configured to form fittingly receive the ridge (4a") of the second bearing surface (4a) and the groove (4a') of the second bearing surface (4a) is configured to from-fittingly receive the ridge (2a") of the first bearing surface (2a)

5. The filter plate frame assembly according to any of the preceding Claims 2-4, **characterized in that**
when the sub-frame (4) is the uppermost position, the seal bead (6) is engaged with the plate (3), and
when the subframe (4) is in the lowermost position, the seal bead (6) is disengaged from the plate (3).

6. The filter plate frame assembly according to any of the preceding Claims 2-4, **characterized in that**,
when the subframe (4) is in the lowermost position, the seal bead (6) is engaged with the plate (3) so as to provide sealing against a first pressure differential, and to leak under a second, higher pressure differential,
when the subframe (4) is in the uppermost position, the seal bead (6) engages with the plate (3) so as to provide sealing also against the second pressure differential.

7. The filter plate frame assembly (1) according to any of the preceding Claims 1-6, **characterized in that** the limited travel of the of subframe (4) is at least 0,5 mm, and preferably at least 1mm.

8. A horizontal filter press, such as a tower press, **characterized in that** the filter comprises:
- a plurality of filter plate frame assemblies (1) according to any of the preceding Claims 1-7, wherein the filter plate frame assemblies (1) are configured movable towards each other into a closed position in which a filter chamber (4c) is formed between adjacent filter plate frame assemblies (1), and away from each to an open position in which adjacent filter plate frame assemblies (1) are spaced apart from each other;
- a filter medium arranged between adjacent filter plate frame assemblies (1);
- a translation arrangement for moving the filter plate frame assemblies (1) towards each other so as to form a filter chamber (4c) between adjacent filter plate frame assemblies (1), and away from each other so as to open the filter chamber;
- a feed arrangement for feeding slurry into the filter chamber (4c);
- a recovering arrangement for recovering filtrate from the filter chamber (4c), and
- a discharge arrangement for discharging a filter cake formed within the filter chamber (4c).

9. The horizontal filter press according to Claim 8, **characterized in that** the filter press further comprises diaphragm inflation means for providing a pressurized medium into the space between the diaphragm (5) and the filter plate (3) so as to inflate the diaphragm and squeeze a filter cake formed within the filter chamber (4c).

## Patentansprüche

1. Filterplattenrahmenanordnung (1) für eine horizontale Filterpresse, wie eine Turmpresse, umfassend:
einen starren Filterplattenrahmen (2), der eine geschlossene Peripherie definiert, und
eine Filterplatte (3), die am Filterplattenrahmen (2) auf der Plattenseite (1a) der Filterplattenrahmenanordnung (1) angebracht ist und mindestens einen durch den Filterplattenrahmen (2) abgegrenzten Bereich abdeckt, und
eine Membran (5) mit einer durchgehenden Dichtwulst (6) zum Abdichten der Membran (5) an der Filterplatte (3) dergestalt, dass ein von der Dichtwulst (6) abgegrenzter Raum zwischen der Membran (5) und der Platte (3) definiert wird,
**gekennzeichnet dadurch, dass** die Filterplattenrahmenanordnung (1) ferner einen Unterrahmen (4) mit einer mittigen Öffnung (4b) mit einem geschlossenen Bereich umfasst, der im Gebrauch eine seitliche Begrenzung einer zugehörigen Filterkammer (4c) definiert, und
wobei der Unterrahmen (4) in die geschlossene Peripherie des Filterplattenrahmens (2) eingelassen ist und von dieser seitlich abgegrenzt wird,
wobei der Unterrahmen (4) zwischen dem Filterplattenrahmen (2) und der Filterplatte (3) vertikal so befestigt ist, dass ein vertikales freies Spiel des Unterrahmens (4) zwischen der Platte (3) und dem Rahmen (2) eine begrenzte vertikale Bewegungsstrecke des Unterrahmens (4) in Bezug auf den Rahmen (2) und die Platte (3) gestattet, und
wobei die Membran am Unterrahmen (4) angebracht ist, zwischen dem Unterrahmen (4) und der Filterplatte (3) sitzt und einen vom Unterrahmen (4) abgegrenzten Bereich abdeckt.

2. Filterplattenrahmenanordnung (1) nach Anspruch 1, **gekennzeichnet dadurch, dass** der Unterrahmen (4) eine oberste Position innerhalb der begrenzten vertikalen Bewegungsstrecke aufweist, die einer Situation entspricht, in welcher der Unterrahmen (4) zur Platte (3) hin gedrückt wird, und eine unterste Position innerhalb der begrenzten vertikalen Bewegungsstrecke aufweist, die einer Situation entspricht, in welcher der Unterrahmen (4) nicht zur Platte (3) hin gedrückt wird.

3. Filterplattenrahmenanordnung (1) nach Anspruch 2, **gekennzeichnet dadurch, dass** der Rahmen (2) eine erste Lagerfläche (2a) umfasst und der Unterrahmen (4) eine zweite Lagerfläche (4a) umfasst,
wobei in der untersten Position der Unterrahmen (4) durch die erste Lagerfläche (2a) vertikal an der zweiten Lagerfläche (4a) gelagert wird, und
wobei in der obersten Position der Unterrahmen (4) nicht durch die erste Lagerfläche vertikal gelagert wird.

4. Filterplattenrahmenanordnung (1) nach Anspruch 3, **gekennzeichnet dadurch, dass** die erste Lagerfläche (2a) eine Nut (2a') und einen Steg (2a") umfasst und die zweite Lagerfläche (4a) eine Nut (4a') und einen Steg (4a") umfasst,
wobei die Nut der ersten Lagerfläche (2a') dazu ausgelegt ist, den Steg (4a") der zweiten Lagerfläche (4a) formschlüssig aufzunehmen, und die Nut (4a') der zweiten Lagerfläche (4a) dazu ausgelegt ist, den Steg (2a") der ersten Lagerfläche (2a) formschlüssig aufzunehmen.

5. Filterplattenrahmenanordnung nach einem der vorhergehenden Ansprüche 2 bis 4, **gekennzeichnet dadurch, dass**,
wenn der Unterrahmen (4) in der obersten Position ist, die Dichtwulst (6) im Eingriff mit der Platte (3) ist, und
wenn der Unterrahmen (4) in der untersten Position ist, die Dichtwulst (6) nicht im Eingriff mit der Platte (3) ist.

6. Filterplattenrahmenanordnung nach einem der vorhergehenden Ansprüche 2 bis 4, **gekennzeichnet dadurch, dass**,
wenn der Unterrahmen (4) in der untersten Position ist, die Dichtwulst (6) im Eingriff mit der Platte (3) ist, so dass sie eine Abdichtung gegen eine erste Druckdifferenz bereitstellt und unter einer zweiten, höheren Druckdifferenz durchlässig ist,
wenn der Unterrahmen (4) in der obersten Position ist, die Dichtwulst (6) im Eingriff mit der Platte (3) ist, so dass sie eine Abdichtung auch gegen die zweite Druckdifferenz bereitstellt.

7. Filterplattenrahmenanordnung (1) nach einem der vorhergehenden Ansprüche 1 bis 6, **gekennzeichnet dadurch, dass** die begrenzte Bewegungsstrecke des Unterrahmens (4) mindestens 0,5 mm und bevorzugt mindestens 1 mm beträgt.

8. Horizontale Filterpresse, wie eine Turmpresse, **gekennzeichnet dadurch, dass** der Filter umfasst:
- eine Mehrzahl von Filterplattenrahmenanordnungen (1) nach einem der vorhergehenden Ansprüche 1 bis 7, wobei die Filterplattenrahmenanordnungen (1) so ausgelegt sind, dass sie aufeinander zu in eine geschlossene Position, in der eine Filterkammer (4c) zwischen angrenzenden Filterplattenrahmenanordnungen (1) ausgebildet wird, und voneinander weg in eine offene Position, in der angrenzende Filterplattenrahmenanordnungen (1) zueinander beabstandet sind, bewegt werden können;
- ein zwischen angrenzenden Filterplattenrahmenanordnungen (1) angeordnetes Filtermedium;
- eine Translationsanordnung zum Bewegen der Filterplattenrahmenanordnungen (1) aufeinander zu, um eine Filterkammer (4c) zwischen angrenzenden Filterplattenrahmenanordnungen (1) auszubilden, und voneinander weg, um die Filterkammer zu öffnen;
- eine Zuführungsanordnung zum Zuführen einer Suspension in die Filterkammer (4c);
- eine Rückgewinnungsanordnung zum Rückgewinnen von Filtrat aus der Filterkammer (4c), und
- eine Austragsanordnung zum Austragen eines in der Filterkammer (4c) ausgebildeten Filterkuchens.

9. Horizontale Filterpresse nach Anspruch 8, **gekennzeichnet dadurch, dass** die Filterpresse ferner Membranaufblasmittel umfasst, um ein druckbeaufschlagtes Medium in den Raum zwischen der Membran (5) und der Filterplatte (3) einzubringen, um so die Membran aufzublasen und einen in der Filterkammer (4c) ausgebildeten Filterkuchen zusammenzudrücken.

## Revendications

1. Ensemble de cadre de plaque filtrante (1) pour un filtre-presse horizontal, tel qu'une presse à tour, comprenant :
un cadre de plaque filtrante rigide (2) définissant une périphérie fermée, et
une plaque filtrante (3) attachée au cadre de plaque filtrante (2) sur le côté plaque (1a) de l'ensemble de cadre de plaque filtrante (1) et recouvrant au moins une zone délimitée par le cadre de plaque filtrante (2), et
un diaphragme (5) comportant un bourrelet d'étanchéité continu (6) pour assurer l'étanchéité du diaphragme (5) contre la plaque filtrante (3) de telle sorte qu'un espace délimité par le bourrelet d'étanchéité (6) est défini entre le diaphragme (5) et la plaque (3),
**caractérisé en ce que** l'ensemble de cadre de plaque filtrante (1) comprend également un sous-cadre (4) avec une ouverture centrale (4b) ayant une zone fermée définissant, pendant l'utilisation, une limite latérale d'une chambre filtrante (4c) associée, et
dans lequel le sous-cadre (4) est imbriqué dans et délimité latéralement par la périphérie fermée du cadre de plaque filtrante (2),
dans lequel le sous-cadre (4) est fixé verticalement entre le cadre de plaque filtrante (2) et la plaque filtrante (3) de telle sorte qu' un jeu libre vertical du sous-cadre (4) entre la plaque (3) et le cadre (2) autorise une course verticale limitée du sous-cadre (4) par rapport au cadre (2) et à la plaque (3), et
dans lequel le diaphragme est attaché au sous-cadre (4), se situe entre le sous-cadre (4) et la plaque filtrante (3) et recouvre une zone délimitée par le sous-cadre (4).

2. Ensemble de cadre de plaque filtrante (1) selon la revendication 1, **caractérisé en ce que** le sous-cadre (4) a une position haute dans la course verticale limitée correspondant à une situation dans laquelle le sous-cadre (4) est pressé vers la plaque (3) et une position basse dans la course verticale limitée correspondant à une situation dans laquelle le sous-cadre (4) n'est pas pressé vers la plaque (3).

3. Ensemble de cadre de plaque filtrante (1) selon la revendication 2, **caractérisé en ce que** le cadre (2) comprend une première surface d'appui (2a) et le sous-cadre (4) comprend une seconde surface d'appui (4a),
ledit sous-cadre (4), dans la position basse, étant appuyé verticalement par la première surface d'appui (2) sur la seconde surface d'appui (4a), et
ledit sous-cadre (4), dans la position haute, n'étant pas appuyé verticalement par la première surface d'appui.

4. Ensemble de cadre de plaque filtrante (1) selon la revendication 3, **caractérisé en ce que**
la première surface d'appui (2a) comprend une rainure (2a') et une crête (2a"), et la seconde surface d'appui (4a) comprend une rainure (4a') et une crête (4a"),
dans lequel la rainure de la première surface d'appui (2a') est configurée pour recevoir la crête (4a") de la seconde surface d'appui (4a) par conjonction de forme, et la rainure (4a') de la seconde surface d'appui (4a) est configurée pour recevoir la crête (2a") de la première surface d'appui (2a) par conjonction de forme.

5. Ensemble de cadre de plaque filtrante selon l'une des revendications précédentes 2 à 4, **caractérisé en ce que**,
lorsque le sous-cadre (4) est dans la position haute, le bourrelet d'étanchéité (6) est en contact avec la plaque (3), et
lorsque le sous-cadre (4) est dans la position basse, le bourrelet d'étanchéité (6) est hors contact avec la plaque (3).

6. Ensemble de cadre de plaque filtrante selon l'une des revendications précédentes 2 à 4, **caractérisé en ce que**,
lorsque le sous-cadre (4) est dans la position basse, le bourrelet d'étanchéité (6) est en contact avec la plaque (3) de manière à assurer une étanchéité contre une première différence de pression et à assurer une fuite à une seconde différence de pression plus élevée,
lorsque le sous-cadre (4) est dans la position haute, le bourrelet d'étanchéité (6) est en contact avec la plaque (3) de manière à assurer une étanchéité également contre la seconde différence de pression.

7. Ensemble de cadre de plaque filtrante (1) selon l'une des revendications précédentes 1 à 6, **caractérisé en ce que** la course limitée du sous-cadre (4) est d'au moins 0,5 mm et préférablement d'au moins 1 mm.

8. Filtre-presse horizontal, tel qu'une presse à tour, **caractérisé en ce que** le filtre comprend :
- une pluralité d'ensembles de cadre de plaque filtrante (1) selon l'une des revendications précédentes 1 à 7, dans lequel les ensembles de cadre de plaque filtrante (1) sont configurés pour pouvoir être rapprochés les uns des autres pour une position fermée dans laquelle une chambre filtrante (4c) est formée entre des ensembles de cadre de plaque filtrante (1) adjacents, et être éloignés les uns des autres pour une position ouverte dans laquelle des ensembles de cadre de plaque filtrante (1) adjacents sont espacés les uns des autres;
- un média filtrant disposé entre des ensembles de cadre de plaque filtrante (1) adjacents;
- un agencement de translation pour rapprocher les ensembles de cadre de plaque filtrante (1) les uns des autres afin de former une chambre filtrante (4c) entre des ensembles de cadre de plaque filtrante (1) adjacents, et pour les éloigner les uns des autres de manière à ouvrir la chambre filtrante;
- un agencement d'alimentation pour introduire une suspension dans la chambre filtrante (4c);
- un agencement de récupération pour récupérer du filtrat sortant de la chambre filtrante (4c), et
- un agencement d'évacuation pour évacuer un gâteau de filtre formé à l'intérieur de la chambre filtrante (4c).

9. Filtre-presse horizontal selon la revendication 8, **caractérisé en ce que** le filtre-presse comprend également un moyen de gonflage de diaphragme pour fournir un fluide pressurisé dans l'espace entre le diaphragme (2) et la plaque filtrante (3) afin de gonfler le diaphragme et presser un gâteau de filtre formé dans la chambre filtrante (4c).
